# EUROPEAN PATENT SPECIFICATION

(11) **EP 2 607 042 B1**
(45) Date of publication and mention of the grant of the patent: **20.08.2014**
(21) Application number: 12197182.4
(22) Date of filing: 14.12.2012
(51) Int. Cl.: B29C 33/14, B29C 45/14

(54) **Moulding station, mould and method for the injection moulding of components having inserts**
Formstation, Werkzeug und Spritzgiessverfahren zur Herstellung von Komponenten mit Einsätzen
Station de moulage, moule et procédé de moulage par injection de composants dotés d'inserts

(30) Priority: 20.12.2011 IT TV20110177
(43) Date of publication of application: 26.06.2013
(73) Proprietor: Da Lio S.p.A., 30033 Noale (Venezia) (IT)
(72) Inventor: Casarin, Stefano, 31010 Zero Branco (Treviso) (IT)
(74) Representative: Dragotti, Gianfranco

(56) References cited:
- WO-A1-2010/130300
- WO-A2-2005/058574
- JP-A- 3 211 020
- JP-A- 11 034 154

## Description

The present invention relates to an innovative station for the injection-moulding of parts provided with flexible decorative inserts. The invention also relates to a mould and a moulding method.

In the sector of injection-moulding it is known to use surface inserts for providing decoration or particular surface effects in zones of the moulded part. For example, it is known to use thin films which are decorated (for example by means of simple colouring or also complex silkscreen printing techniques) and which are inserted into the die of the mould so as to be incorporated on the surface of the moulded part. An example of application consists in the moulding of components for cars and motor vehicles (so-called automotive components).

A problem of the prior art consists in positioning and maintaining the correct position of the insert inside the mould during the moulding process. For sufficiently thin components, such as decorative films, it has been proposed using an electrostatic system which ensures that the film remains in contact with the die during closing of the mould and injection of the plastic. This system, however, has various drawbacks, such as that of attracting dust inside the die (with consequent inacceptable inclusions which result in the a large number of rejects) and that of working only with types of film which are sensitive to electrostatic attraction. This latter drawback limits also the use of colours, since electrostatic attraction does not function satisfactorily with films which are metallized or coloured with dark shades. Moreover, when using an electrostatic charge it is possible to fix the film only on surfaces which have certain geometries, i.e. basically only those which are more or less flat.

The use of an electrostatic charge also limits greatly the choice of materials for the mould.

It has also been proposed providing suction nozzles which are distributed over the surface of the die in order to retain the films against this surface. This system has the drawback, however, of causing deformation of the films in the suction zones, which remains visible on the finished product and often results in the product being unacceptable from an aesthetic point of view.

Both the systems are also subject to possible limitations in the choice of material and the thicknesses of the films.

It is also known from WO2005/058574 to provide a mould with suction means suitable for keeping a decorative insert in position by operating on a non-visible surface of this insert. However, solely rigid decorative inserts may be used with this type of mould. Flexible inserts, in fact, would suffer from deformation along their perimetral profile, resulting in the moulded part being unacceptable from an aesthetic point of view.

The general object of the present invention is to overcome the drawbacks of the prior art by providing a moulding method, a mould and a moulding station which allow, among other things, reliable positioning of flexible surface inserts during injection-moulding of products, while obtaining with relative ease a result which is aesthetically satisfactory and a greater freedom in the choice of materials.

In view of this object the idea which has occurred, according to the invention, is to provide a a mould in accordance with that claimed in claim 1.

The abovementioned object is also achieved with a method in accordance with that claimed in claim 6.

In order to illustrate more clearly the innovative principles of the present invention and its advantages compared to the prior art, an example of embodiment applying these principles will be described below, with the aid of the accompanying drawings. In the drawings:
- Figure 1 shows a schematic and partial longitudinally sectioned view of a moulding station according to the invention during loading of a surface insert;
- Figure 2 shows a view, similar to that of Figure 1, but with the moulding station in the position where the mould is closed;.
- Figure 2A shows a view, similar to that of Figure 2, but with the mould during a first injection step;
- Figure 3 shows a view, similar to that of Figure 1, but with the mould during a second injection step;
- Figure 4 shows a view, similar to that of Figure 1, but with the mould during a step for extraction of the moulded part;
- Figure 5 shows in schematic form a view, on a larger scale, of the detail indicated by A in Figure 2;
- Figure 6 shows in schematic form a view, on a larger scale, of the detail indicated by B in Figure 3.

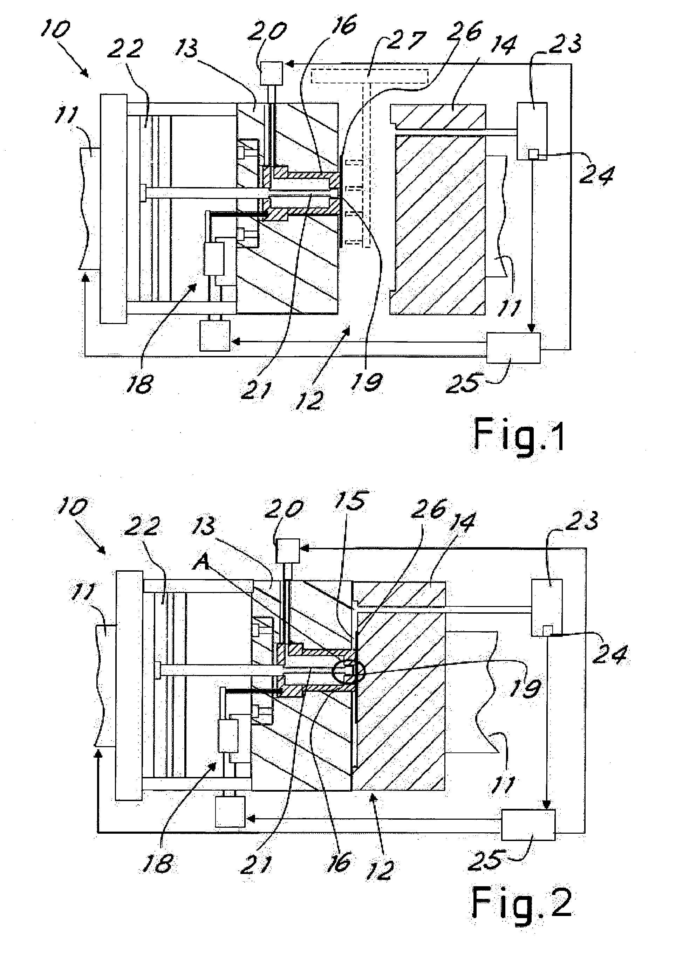

With reference to the figures, Figure 1 shows a moulding station denoted in general by 10.

The station 10 comprises a press 11 (which is known per se and therefore not described here nor further illustrated in detail) and a mould 12 which is formed by a punch 13 and by a die 14 which are arranged in respective press planes of the press 11.

The respective facing walls of the punch 13 and die 14 have impressions which define a moulding chamber 15. Here, for the sake of simplicity, the moulding chamber 15 is shown as having substantially a rectangular cross-section, but this chamber may have any form suitable for moulding the desired part, in accordance with the normal knowledge of the person skilled in the art.

The punch 13 has at least one stop member 16 which is slidable, upon operation, between a position retracted in the wall of the punch 13 which forms part of the moulding chamber 15 and an advanced position in which it protrudes with one of its ends from this wall of the punch 13, as will be clarified below.

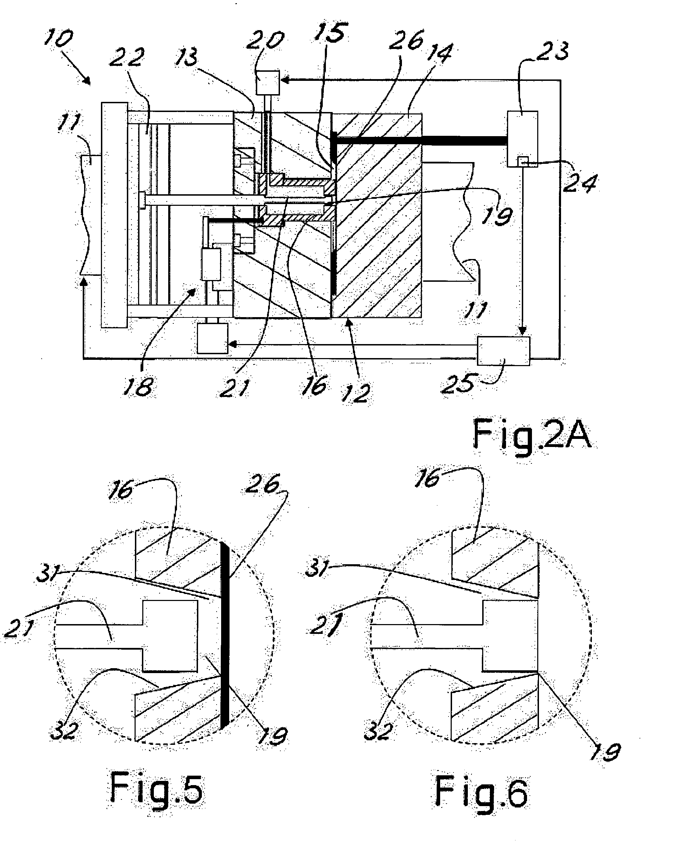

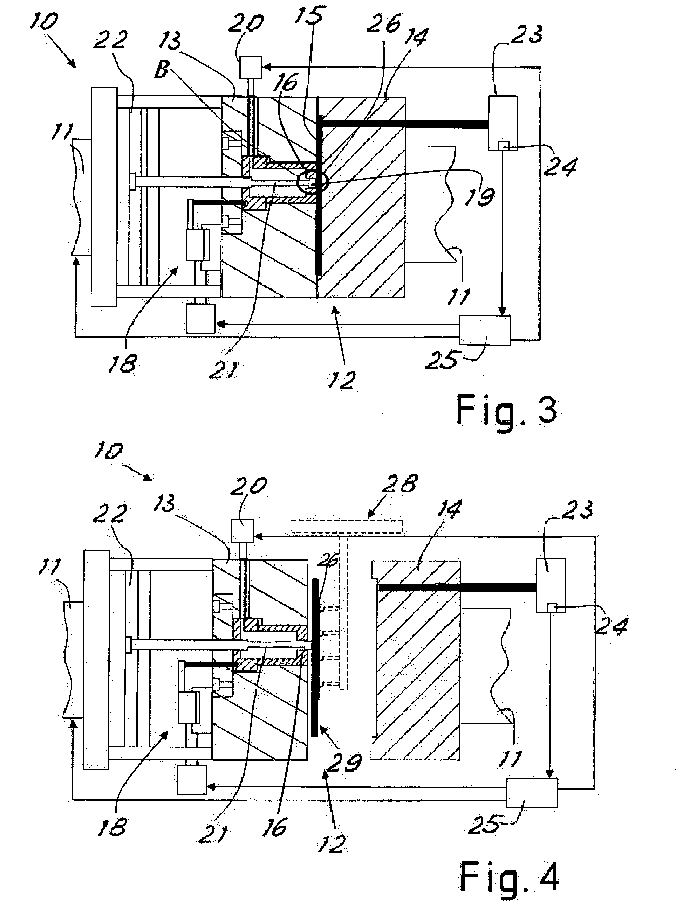

For the movement between the retracted position (shown for example in Figures 3 and 4) and the advanced position (shown for example in Figures 1 and 2), the stop member 16 is advantageously connected, by means of a rigid connection, to a pneumatic actuator 18.

A suction mouth 19, which is connected to a controlled vacuum source 20, is advantageously present in the end of the stop member 16 which is intended to protrude, upon operation, from the wall of the punch 13.

The punch 13 also has a controlled pusher or expulsion member 21 which is advantageously arranged centrally with respect to the suction mouth 19 so as to move, upon operation, between an inoperative position retracted in the sliding member (as shown for example in Figure 1) and an operative position projecting from the said end of the sliding member (as shown in Figure 4) at least when the latter is in the retracted position. The means for moving the pusher 21 (for example comprising an extraction plate 22 of the press) are not shown nor described in detail since they are known to the person skilled in the art.

Advantageously, the relative dimensions and forms of the suction mouth 19 and the pusher 21 are such that, when the pusher 21 is in the retracted position and the stop member 16 is in the advanced position at least one annular space 31 is formed between pusher 21 and inner wall 32 of the suction mouth 19 (see Figure 5), such that the vacuum source may draw in air through the mouth 19, whereas when the pusher and the thrust member are both in the rest position, the annular passage is eliminated, such as to prevent the entry of fluid plastic material into the mouth. This may be obtained for example by suitably forming the inner walls of the mouth with a conical shape which widens towards the inside and which has an output diameter substantially the same as the diameter of the pusher, which has a cylindrical form, with only minimum lateral play so as to allow sliding (see Figure 6). Advantageously, when the pusher is moved towards its protruding position, its sliding movement with minimum play in the proximity of the output edge of the mouth removes any small infiltrations of plastic injected into the mould during the moulding steps.

The station also comprises a known controlled source 23 for the fluid plastic material to be injected into the moulding chamber 15. These means may comprise, for example, an extruder screw feeder (not shown), in accordance with conventional injection-moulding technology.

Advantageously, the station also comprises sensor means 24 for detecting the amount of fluid plastic injected into the moulding chamber 15. For example, these means may advantageously comprise a suitable sensor, such as a metric ruler, connected to the extruder screw.

These sensor means 24 are connected to control means 25 which may be advantageously formed by means of a known programmable or wired logic electronic controller, as will be clarified below.

Owing to these sensor means 24, the control means 25 may cause the movement of the stop member 16 from the advanced position into the retracted position after a predetermined amount of plastic material, less than the amount for complete filling of the moulding chamber 15, has been injected into the chamber 15, as will be further explained below.

The controller 25 may also be the main controller of the station and therefore be connected to the vacuum source 20, the press 11 and the plastic source 23 so as to perform the entire sequential management of the moulding cycle.

During operation, a moulding cycle comprises, when the mould is open, movement of the stop member 16 towards the advanced position and activation of the suction mouth 19 so as to retain an insert 26 which is formed by a flexible surface decoration film and is arranged next thereto, advantageously by means of an automated loading system 27 of the type known per se (for example of the type comprising an automated arm and pick-up end with suckers, as shown schematically in broken lines in Figure 1).

After the insert 26 has been loaded, the press 11 is activated with the appropriate pressure and the mould 12 is thus closed (see Figure 2). With closing of the mould, the insert is pushed by the member 16 against the opposite wall of the die, keeping it in contact therewith. During this step, the suction may be advantageously deactivated, it being no longer necessary to keep the insert in position.

At this point, injection of the plastic is activated, as schematically shown in Figure 2A.

Advantageously, owing to the sensor 24, when the amount of injected plastic has reached the said first preset amount, the controller 25 causes retraction of the stop member 16. The preset first quantity of plastic is advantageously such as to fix the insert 26 in position peripherally without reaching (or reaching only partially) the thrust stop member (or members) 16.

After retraction of the stop member 16, injection of the plastic material may thus continue until the moulding chamber 15 has been completely filled and the moulded part has been definitively formed.

This is shown schematically in Figure 3. As can be seen for example in this figure, the pusher 21 and the stop member 16 are substantially flush with the wall of the punch 13 which forms the moulding chamber 15, so as not to produce any substantial discontinuity in this wall. It should also be considered that usually the wall of the punch 13 forms a part of the moulded object which is of no importance from an aesthetic point of view, the decorative insert being on the other side of the object.

Once moulding has been completed, the mould 12 is opened again by means of suitable operation of the press 11 and the pusher 21 is advantageously operated so as to produce reliable separation of the moulded part 29, comprising the insert 26, from the punch 13. The moulded part 29 may thus be removed from the station 10 and the moulding cycle may recommence in order to produce the next part. Advantageously, removal of the moulded part may be performed using an automated unloading system 28 of the type known per se (for example, of the type comprising an automated arm and a pick-up end with suckers, as shown in broken lines in Figure 4). The system for loading the inserts and unloading the moulded part may also be formed by a single automated arm provided with suitable pick-up ends for being able to perform both functions, as may be now easily imagined by the person skilled in the art.

It should be noted how the application of the invention is particularly advantageous during the moulding of car and motor vehicle components in which the insert is generally formed by a flexible decorative film. Said flexible decorative film has a thickness usually of between 0.05 mm and 0.25 mm.

However, the present invention may be advantageously applied also in the case where a component made of plastic material must be decorated with a rigid insert of varying thickness. In such a case, if necessary, it will be required only to ascertain the correct position both of the stop members 16 and of the point of injection of the fluid plastic material inside the moulding chamber 15, in order to check that the insert is kept in position once the stop members 16 have been retracted.

At this point it is clear how the predefined objects have been achieved by providing a moulding station and a moulding method which are able to obtain parts with flexible superficial inserts which are suitably positioned, without the aforementioned drawbacks of the prior art. Owing to the invention, there are for example no limitations as regards the nature and material of the insert as well as colouring and metallization thereof. There are no limitations as regards the material of the insert since flexible films which are made of plastic, metal, textiles, etc, may be used for example, the fixing method being of the mechanical type. Moreover, inserts which are opaque, metallized or have pastel shades of colour may be used. Finally, films painted with polyurethane, acrylic and water products may be used.

By means of application of the present invention inserts with a variable form and geometry may be fixed inside the moulding chamber 15. In particular, flexible decorative inserts may also be applied onto products which have a surface profile characterized by a marked curvature.

Moreover, there is no longer the risk, owing to the use of an electrostatic charge, of the presence of possible inclusions of powder inside the moulded part 29, with a consequent reduction in the number of manufacturing rejects.

The moulded part 29 made using the present invention has a high surface finish compared to parts made using the method of vacuum fixing in the region of the mould die. The visible surface of the insert 26 does not have visual defects.

Also, the materials of the mould and the associated surface treatment may be freely chosen from among those which are suitable for normal injection-moulding operations. Moreover, the system described is rapid, robust and relatively inexpensive.

Obviously, the above description of an embodiment applying the innovative principles of the present invention is provided by way of example of these innovative principles and must therefore not be regarded as limiting the scope of the protection claimed herein.

For example, the sliding stop members may be more than one in number and be suitably arranged in the punch so as to suitably support one or more flexible inserts of varying form, such that there is no distortion of the insert and/or no infiltration of plastic between the surface of the insert and the contact wall inside the die. The arrangement of the stop members may also be optimized depending on the position or positions of entry of the plastic into the mould, such that the plastic entering the mould encounters, for example, first of all portions of the flexible insert which are more firmly retained by the stop members, so as to avoid possible infiltration of the plastic underneath the insert.

The station may obviously comprise any other known element or device for the injection-moulding of plastic parts.

Finally, the forms and proportions of the various parts of the mould and the station may vary depending on the specific practical requirements.

## Claims

1. Mould (12) formed by a punch (13) and a die (14) able to be moved towards each other so as to form with respective walls a moulding chamber (15) for a plastic part (29) having at least one insert (26) formed by a flexible surface-decoration film, the punch (13) having at least one stop member (16) for the flexible surface-decoration film (26) inside the moulding chamber (15), the stop member (16) being slidable, upon operation, between a position retracted in the wall of the punch (13) and an advanced position in which protrudes with one of its ends from the wall of the punch (13) to push with said end the flexible surface-decoration film (26) against the opposite wall of the die (14) when the mould (12) is closed; a suction mouth (19) operated so as to retain the flexible surface-decoration film (26) on the sliding stop member (16) being present in the said end of the stop member (16);
said mould (12) being **characterized in that**, centrally with respect to the suction mouth (19), the sliding stop member (16) comprises a pusher (21) movable, upon operation, between an inoperative position retracted in the sliding stop member (16) and an operative position protruding from said end of the sliding stop member (16).

2. Moulding station (10) comprising a press (11) having, mounted thereon, a mould (12) as claimed in claim 1; said moulding station (10) further comprising means (21) for extraction of the plastic moulded part (29); the moulding station (10) being **characterized in that** said extraction means (21) comprise a pusher (21) arranged centrally with respect to the suction mouth (19) present on the end of the sliding stop member (16); said pusher (21) being movable, upon operation, between an inoperative position retracted in the sliding stop member (16) and an operative position protruding from the said end of the sliding stop member (16).

3. Moulding station (10) according to claim 2, **characterized in that** it comprises sensor means (24) for detecting the amount of plastic injected into the moulding chamber (15) and control means (25) for controlling the movement of the stop member (16) from the advanced position to the retracted position after a preset amount of plastic, smaller than the amount for complete filling of the moulding chamber (15), has been injected into the moulding chamber (15).

4. Moulding station (10) according to claim 3, **characterized in that** it comprises a controller (25) connected for the sequential management of a moulding cycle comprising, when the mould (12) is open, movement of the stop member (16) towards the advanced position and the activation of the suction mouth (19) so as to retain a flexible surface-decoration film (26) arranged next thereto, closure of the mould (12) with pushing of the flexible surface-decoration film (26) against the opposite wall of the die (14), injection of the plastic until said first amount is reached, retraction of the stop member (16), with suction deactivated, towards its retracted position, continuation of the injection for complete filling of the moulding chamber (15), opening of the mould (12) and the advancing movement of the pusher (21) for separation of the moulded part (29) from the punch (13).

5. Moulding station (10) according to claim 2, **characterized in that** said flexible surface-decoration film (26) has a thickness of between 0.05 mm and 0.25 mm.

6. Method for moulding a plastic part (29), incorporating at least one insert (26) formed by a flexible surface-decoration film, by means of a moulding station (10) comprising a press (11) and a mould (12) formed by a punch (13) and a die (14) with respective walls defining a moulding chamber (15), wherein, when the mould (12) is closed, a flexible surface-decoration film (26) is initially pushed against the wall of the die (14) by means of a sliding stop member (16) which comes out of the facing wall of the punch (13) and on which the flexible surface-decoration film (26) is retained by means of a suction action;
wherein when the mould (12) is reopened after the end of the moulding step, a pusher (21) is actuated so as to protrude, through a suction mouth (19) which is present on the stop member (16) for suction operation on the insert, and cause the separation of the moulded part (29) from the punch (13).

7. Method according to claim 6, wherein the sliding stop member (16) is retracted after a preset first amount of plastic smaller than the amount for complete filling of the moulding chamber (15) has been injected into the moulding chamber (15).

8. Method according to claim 7, wherein a moulding cycle comprises sequentially:
- activation of the suction so as to retain a flexible surface-decoration film (26) which is arranged next to the sliding stop member (16);
- closure of the mould (12) with pushing of the flexible surface-decoration film (26) against the opposite wall of the die (14) by means of the sliding stop member (16);
- injection of the plastic until said first amount is reached;
- retraction of the sliding stop member (16) towards its retracted position;
- continuation of injection for complete filling of the moulding chamber (15);
- opening of the mould (12) and the advancing movement of the pusher (21) for separation of the moulded part (29) from the punch (13).

9. Method according to claim 6, wherein the insert (26) formed by a flexible surface-decoration film has a thickness of between 0.05 mm and 0.25 mm.

## Patentansprüche

1. Gussform (12), die durch einen Stempel (13) und ein Werkzeug (14) gebildet ist, die zueinander bewegt werden können, um so mit entsprechenden Wänden eine Formkammer (15) für ein Kunststoffteil (29) zu bilden, das zumindest einen Einsatz (26) hat, der durch einen flexiblen Oberflächendekorationsfilm gebildet ist, wobei der Stempel (13) zumindest ein Stoppelement (16) für den flexiblen Oberflächendekorationsfilm (26) im Inneren der Formkammer (15) hat, wobei das Stoppelement (16) bei einer Betätigung zwischen einer Position, die in der Wand des Stempels (13) zurückgezogen ist, und einer vorstehenden Position verschoben werden kann, an der es mit einem seiner Enden von der Wand des Stempels (13) vorsteht, um mit dem Ende den flexiblen Oberflächendekorationsfilm (26) gegen die gegenüberliegende Wand des Werkzeugs (14) zu drücken, wenn die Gussform (12) geschlossen wird; wobei eine Saugöffnung (19) so betrieben wird, dass sie den flexiblen Oberflächendekorationsfilm (26) an dem gleitenden Stoppelement (16) zurückhält, die an dem Ende des Stoppelements (16) vorhanden ist;
wobei die Gussform (12) **dadurch gekennzeichnet ist, dass** hinsichtlich der Saugöffnung (16) das gleitende Stoppelement (16) einen Drücker (21) zentral aufweist, der bei einer Betätigung zwischen einer passiven Position, die in dem gleitenden Stoppelement (16) zurückgezogen ist, und einer aktiven Position bewegbar ist, die von dem Ende des gleitenden Stoppelements (16) vorsteht.

2. Gussstation (10), die eine Presse (11) aufweist, an der eine Gussform (12) gemäß Anspruch 1 angebracht ist; wobei die Gussstation (10) des Weiteren eine Einrichtung (21) zum Extrahieren des Kunststoffformteils (29) aufweist; wobei die Formstation (10) **dadurch gekennzeichnet ist, dass** die Extraktionseinrichtung (21) einen Drücker (21) aufweist, der hinsichtlich der Saugöffnung (19), die an dem Ende des gleitenden Stoppelements (16) vorhanden ist, zentral angeordnet ist, wobei der Drücker (21) bei einer Betätigung zwischen einer passiven Position, die in dem gleitenden Stoppelement (16) zurückgezogen ist, und einer aktiven Position bewegbar ist, die von dem Ende des gleitenden Stoppelements (19) vorsteht.

3. Gussstation (10) gemäß Anspruch 2, **dadurch gekennzeichnet, dass** sie eine Sensoreinrichtung (24) zum Erfassen der Kunststoffmenge aufweist, die in die Formkammer (15) eingespritzt wird, und eine Steuereinrichtung (25) zum Steuern der Bewegung des Stoppelements (16) von der vorstehenden Position zu der zurückgezogenen Position, nachdem eine voreingestellte Kunststoffmenge, die kleiner ist als die Menge zum vollständigen Füllen der Formkammer (15), in die Formkammer (15) eingespritzt wurde.

4. Gussstation (10) gemäß Anspruch 3, **dadurch gekennzeichnet, dass** sie eine Steuervorrichtung (25) aufweist, die für das Management eines sequentielle Gusszyklus, wenn die Gussform (12) offen ist, Folgendes aufweist: eine Bewegung des Stoppelements (16) zu der vorstehenden Position und die Aktivierung der Saugöffnung (19), um so einen flexiblen Oberflächendekorationsfilm (26) zurückzuhalten, der daneben angeordnet ist, ein Schließen der Gussform (12) mit einem Drücken des flexiblen Oberflächendekorationsfilms (26) gegen die gegenüberliegende Wand des Werkzeugs (14), ein Einspritzen des Kunststoffs, bis die erste Menge erreicht ist, ein Zurückziehen des Stoppelements (16), wobei das Saugen deaktiviert ist, zu seiner zurückgezogenen Position, ein Fortsetzen des Einspritzens zum vollständigen Füllen der Gussform (15), ein Öffnen der Gussform (12) und die vorrückende Bewegung des Drückers (21) zum Trennen des Formteils (29) von dem Stempel (13).

5. Gussstation (10) gemäß Anspruch 2, **dadurch gekennzeichnet, dass** der flexible Oberflächendekorationsfilm (26) eine Dicke zwischen 0,05 mm und 0,25 mm hat.

6. Verfahren zum Formen eines Kunststoffteils (29), mit einem Integrieren zumindest eines Einsatzes (26), der durch einen flexiblen Oberflächendekorationsfilm gebildet ist, mittels einer Formstation (10), die eine Presse (11) und eine Gussform (12) aufweist, die durch einen Stempel (13) und ein Werkzeug (14) mit jeweiligen Wänden gebildet ist, die eine Formkammer (15) definieren, wobei, wenn die Gussform (12) geschlossen wird, ein flexibler Oberflächendekorationsfilm (26) anfänglich gegen die Wand des Werkzeugs (14) mittels eines gleitenden Stoppelements (16) gedrückt wird, das aus der dem Stempel (13) zugewandten Wand herauskommt, und an dem der flexible Oberflächendekorationsfilm (26) mittels eines Saugvorgangs zurückgehalten wird;
wobei, wenn die Gussform (12) nach dem Ende des Formschrittes erneut geöffnet wird, ein Drücker (21) so betätigt wird, dass er durch eine Saugöffnung (19), die an dem Stoppelement (16) für einen Saugbetrieb an dem Einsatz vorhanden ist, vorsteht und eine Trennung des Formteils (29) von dem Stempel (13) veranlasst.

7. Verfahren gemäß Anspruch 6, wobei das gleitende Stoppelement (16) zurückgezogen wird, nachdem eine voreingestellte erste Menge des Kunststoffs, die kleiner ist als die Menge zum vollständigen Füllen der Formkammer (15), in die Formkammer (15) eingespritzt wurde.

8. Verfahren gemäß Anspruch 7, wobei ein Formzyklus sequentiell Folgendes aufweist:
- Aktivieren des Saugens, um so einen flexiblen Oberflächendekorationsfilm (26) zurückzuhalten, der neben dem gleitenden Stoppelement (16) angeordnet ist;
- Schließen der Gussform (12) mit einem Drücken des flexiblen Oberflächendekorationsfilms (26) gegen die gegenüberliegende Wand des Werkzeugs (14) mittels des gleitenden Stoppelements (16),
- Einspritzen des Kunststoffs, bis die erste Menge erreicht ist;
- Zurückziehen des gleitenden Stoppelements (16) zu seiner zurückgezogenen Position;
- Fortsetzen des Einspritzens zum vollständigen Füllen der Formkammer (15);
- Öffnen der Gussform (12) und vorrückende Bewegung des Drückers (21) für eine Trennung des Formteils (29) von dem Stempel (13).

9. Verfahren gemäß Anspruch 6, wobei der Einsatz (26), der durch einen flexiblen Oberflächendekorationsfilm gebildet ist, eine Dicke zwischen 0,05 mm und 0,25 mm hat.

## Revendications

1. Moule (12) formé par un poinçon (13) et une matrice (14) pouvant se déplacer l'un vers l'autre afin de former avec des parois respectives, une chambre de moulage (15) pour une partie de plastique (29) ayant au moins un insert (26) formé par un film souple de décoration de surface, le poinçon (13) ayant au moins un élément de butée (16) pour le film souple de décoration de surface (26) à l'intérieur de la chambre de moulage (15), l'élément de butée (16) pouvant coulisser, suite à l'actionnement, entre une position rétractée dans la paroi du poinçon (13) et une position avancée dans laquelle il fait saillie avec l'une de ses extrémités, de la paroi du poinçon (13) afin de pousser avec ladite extrémité du film souple de décoration de surface (26) contre la paroi opposée de la matrice (14) lorsque le moule (12) est fermé ; une bouche d'aspiration (19) actionnée afin de retenir le film souple de décoration de surface (26) sur l'élément de butée (16) coulissant, qui est présent dans ladite extrémité de l'élément de butée (16) ;
ledit moule (12) étant **caractérisé en ce que**, au centre par rapport à la bouche d'aspiration (19), l'élément de butée coulissant (16) comprend un poussoir (21) mobile, suite à l'actionnement, entre une position non opérationnelle rétractée dans l'élément de butée (16) coulissant et une position opérationnelle faisant saillie de ladite extrémité de l'élément de butée (16) coulissant.

2. Station de moulage (10) comprenant une presse (11) ayant, montée sur cette dernière, un moule (12) selon la revendication 1 ; ladite station de moulage (10) comprenant en outre des moyens (21) pour l'extraction de la partie moulée en plastique (29) ; la station de moulage (10) étant **caractérisée en ce que** lesdits moyens d'extraction (21) comprennent un poussoir (21) agencé de manière centrale par rapport à la bouche d'aspiration (19) présente sur l'extrémité de l'élément de butée (16) coulissant ; ledit poussoir (21) étant mobile, suite à l'actionnement, entre une position non opérationnelle rétractée dans l'élément de butée (16) coulissant et une position opérationnelle faisant saillie de ladite extrémité de l'élément de butée (16) coulissant.

3. Station de moulage (10) selon la revendication 2, **caractérisée en ce qu'**elle comprend des moyens de capteur (24) pour détecter la quantité de plastique injectée dans la chambre de moulage (15) et des moyens de commande (25) pour commander le mouvement de l'élément de butée (16) de la position avancée à la position rétractée après qu'une quantité prédéterminée de plastique, inférieure à la quantité pour terminer le remplissage de la chambre de moulage (15), a été injectée dans la chambre de moulage (15).

4. Station de moulage (10) selon la revendication 3, **caractérisée en ce qu'**elle comprend un organe de commande (25) raccordé pour la gestion séquentielle d'un cycle de moulage comprenant, lorsque le moule (12) est ouvert, le mouvement de l'élément de butée (16) vers la position avancée et l'activation de la bouche d'aspiration (19) afin de retenir un film souple de décoration de surface (26) agencé à côté de ce dernier, la fermeture du moule (12) avec la poussée du film souple de décoration de surface (26) contre la paroi opposée de la matrice (14), l'injection du plastique jusqu'à ce que ladite première quantité soit atteinte, la rétraction de l'élément de butée (16), avec l'aspiration désactivée, vers sa position rétractée, la continuation de l'injection pour le remplissage complet de la chambre de moulage (15), l'ouverture du moule (12) et le mouvement d'avancement du poussoir (21) pour la séparation de la pièce moulée (29) du poinçon (13).

5. Station de moulage (10) selon la revendication 2, **caractérisée en ce que** ledit film souple de décoration de surface (26) a une épaisseur comprise entre 0,05 mm et 0,25 mm.

6. Procédé pour mouler une pièce en plastique (29), comprenant au moins un insert (26) formé par un film souple de décoration de surface, au moyen d'une station de moulage (10) comprenant une presse (11) et un moule (12) formé par un poinçon (13) et une matrice (14) avec des parois respectives qui définissent une chambre de moulage (15), dans lequel, lorsque le moule (12) est fermé, un film souple de décoration de surface (26) est poussé de manière initiale contre la paroi de la matrice (14) au moyen d'un élément de butée (16) coulissant qui sort de la paroi en vis-à-vis du poinçon (13) et sur laquelle le film souple de décoration de surface (26) est retenu au moyen d'une action d'aspiration ;
dans lequel lorsque le moule (12) est rouvert après la fin de l'étape de moulage, un poussoir (21) est actionné pour faire saillie, à travers une bouche d'aspiration (19) qui est présente sur l'élément de butée (16) pour l'opération d'aspiration sur l'insert, et provoque la séparation de la pièce moulée (29) du poinçon (13).

7. Procédé selon la revendication 6, dans lequel l'élément de butée (16) coulissant est rétracté après qu'une première quantité prédéterminée inférieure à la quantité pour le remplissage complet de la chambre de moulage (15) a été injectée dans la chambre de moulage (15).

8. Procédé selon la revendication 7, dans lequel un cycle de moulage comprend séquentiellement :
l'activation de l'aspiration afin de retenir un film souple de décoration de surface (26) qui est agencé à côté de l'élément de butée (16) coulissant ;
la fermeture du moule (12) avec la poussée du film souple de décoration de surface (26) contre la paroi opposée de la matrice (14) au moyen de l'élément de butée (16) coulissant ;
l'injection du plastique jusqu'à ce que ladite première quantité soit atteinte ;
la rétraction de l'élément de butée (16) coulissant vers sa position rétractée ;
la continuation de l'injection pour le remplissage complet de la chambre de moulage (15) ;
l'ouverture du moule (12) et le mouvement d'avancement du poussoir (21) pour la séparation de la pièce moulée (29) du poinçon (13).

9. Procédé selon la revendication 6, dans lequel l'insert (26) formé par un film souple de décoration de surface a une épaisseur comprise entre 0,05 mm et 0,25 mm.
